# DEMANDE DE BREVET EUROPEEN

(11) **EP 0 895 829 A1**
(43) Date de publication de la demande: **10.02.1999**
(21) Numéro de dépôt: 98420136.8
(22) Date de dépôt: 30.07.1998
(51) Int. Cl.: B23Q 11/00

(54) **Dispositif de séparation de copeaux**

(30) Priorité: 04.08.1997 FR 9710183
(71) Demandeur: A.D. Développement, 74950 Scionzier (FR)
(72) Inventeur: Alzay, Bertrand, 74950 Scionzier (FR)
(74) Mandataire: Poncet, Jean-François

(57) **Abrégé**

Le dispositif selon l'invention est un ensemble monobloc déplaçable comportant un bac (12) étanche à l'huile et ouvert en partie supérieure (13), adapté pour contenir de l'huile jusqu'à un niveau (11) supérieur à celui présent dans le carter de la machine-outil. Un bec de retour d'huile (14) est adapté pour évacuer par gravité le trop plein d'huile et le déverser dans le carter de la machine-outil. Un convoyeur (15) à rampe inclinée et palettes de raclage est adapté pour déplacer les copeaux depuis une zone inférieure de réception (16) dans le bac en les relevant jusqu'à une sortie (10). Une trémie (19) permet de recevoir les copeaux et de les diriger vers la zone inférieure de réception (16). On réalise ainsi un dispositif autonome peu onéreux et particulièrement fiable assurant l'égouttage et l'évacuation des copeaux de coupe d'une machine-outil.

## Description

La présente invention concerne les machines-outils, et plus particulièrement les dispositifs permettant de séparer l'huile de coupe et les copeaux produits par une machine-outil lors de l'usinage d'une pièce, et permettant d'évacuer ces copeaux.

Le document US 4,955,770 A décrit un dispositif d'évacuation de copeaux, adaptable sous une machine-outil et dans lequel les copeaux descendent par gravité jusqu'à un orifice de sortie. La séparation de l'huile et des copeaux n'est pas satisfaisante, et une pompe est nécessaire pour remonter l'huile.

Le document US 4,685,361 A décrit une machine-outil sur laquelle s'adapte un dispositif de séparation de copeaux ayant un convoyeur à chaîne à nappe d'évacuation supérieure et nappe de retour inférieure, dont un tronçon surbaissé peut être engagé sous la zone d'usinage de la machine-outil, et dont un tronçon relevé assure l'évacuation des copeaux au dessus du niveau d'huile de coupe et de refroidissement. Le dispositif de séparation de copeaux peut être engagé frontalement dans la machine-outil, et il comprend une pompe de circulation de l'huile de coupe et de refroidissement pour rejeter l'huile dans la machine-outil.

Un tel dispositif nécessite une structure particulière de machine-outil, permettant l'engagement frontal de la partie inférieure du convoyeur, et n'est donc pas adapté aux machines-outils traditionnelles. Il nécessite en outre de disposer une pompe pour refouler l'huile depuis le dispositif jusque dans la machine-outil, ladite huile devant être filtrée avant la pompe. Le filtrage et le pompage de l'huile sont des opérations délicates, qui augmentent sensiblement le coût du dispositif de séparation de copeaux et qui en réduisent le débit. En outre, la structure du convoyeur à chaîne à axes horizontaux manque de fiabilité, par suite des risques de bourrage de copeaux lors du parcours.

Le document JP 07 124 843 A décrit un transporteur de copeaux à vis et balais, placé au-dessus d'un bac de réception d'huile. Les risques de bourrage de copeaux ne sont pas évités, malgré la présence des balais, et une pompe de retour d'huile est nécessaire.

Le document JP 07 075 933 A décrit un transporteur de copeaux à chaîne et axes horizontaux, présentant les mêmes risques de bourrage de copeaux que celui du document US 4,685,361 A, et nécessitant un convoyeur intermédiaire à bande et une pompe de retour d'huile.

Le problème proposé par la présente invention est de concevoir un nouveau dispositif de séparation de copeaux qui soit amovible et adaptable à la plupart des machines-outils notamment aux tours multibroches vendus par la société TORNOS sous les références AS 14, SAS 16, SAS 16 DC et SAS 16.6. Le dispositif de l'invention doit pouvoir évacuer des copeaux en toute matière, en assurant une séparation efficace des copeaux et de l'huile, en permettant un gros débit d'évacuation des copeaux et de l'huile, et en constituant un système autonome, standard, et manipulable très rapidement pour son engagement et son dégagement de la machine-outil. Le dispositif de l'invention doit en outre présenter une grande fiabilité et un faible coût de production, en évitant d'avoir recours à des pompes de circulation d'huile, et en réduisant très sensiblement les risques de bourrage de copeaux.

Pour atteindre ces objets ainsi que d'autres, un dispositif de séparation de copeaux selon l'invention, adaptable à une machine-outil pour séparer et évacuer les copeaux résultant de l'usinage effectué par la machine-outil, comprend des moyens de réception de l'huile de coupe et des copeaux sortant de la zone d'usinage de la machine-outil, et des moyens de transfert des copeaux depuis les moyens de réception jusqu'à une sortie de copeaux située en une position plus élevée que le niveau d'huile de coupe ; le dispositif est un ensemble monobloc déplaçable distinct de la machine-outil et comportant un bac étanche à l'huile et ouvert en partie supérieure, le bac étant adapté pour contenir de l'huile jusqu'à un niveau d'huile de coupe supérieur à celui présent dans le carter de la machine-outil, avec un bec de retour d'huile adapté pour évacuer par gravité le trop plein d'huile du bac et pour le déverser dans le carter de la machine-outil, avec un convoyeur adapté pour déplacer les copeaux depuis une zone inférieure de réception dans le bac en les relevant jusqu'à la sortie de copeaux, et avec les moyens de réception adaptés pour recevoir et pour guider vers ladite zone inférieure de réception les copeaux et l'huile de coupe provenant de la machine-outil.

De préférence, le dispositif selon l'invention constitue un chariot déplaçable monté sur des roulettes et dimensionné pour permettre son engagement sous le passage de barres entre la machine-outil et un embarreur.

Selon un mode de réalisation avantageux, le bac est généralement parallélépipédique, avec des roulettes adaptées en face inférieure du bac, avec le bec de retour d'huile dépassant d'un premier petit côté du bac, avec la sortie de copeaux située dans la zone de second petit côté du bac, et avec les moyens de réception disposés dans la zone du premier petit côté du bac.

Pour réaliser une structure fiable, évitant les risques de bourrage, le convoyeur comprend :
- une rampe longitudinale ascendante dont l'extrémité inférieure est engagée sous les moyens de réception et dont l'extrémité supérieure dépasse au-delà du second petit côté du bac,
- des palettes allongées orientées transversalement au dessus de la rampe longitudinale ascendante, guidées et entraînées en translation longitudinale le long de la rampe longitudinale ascendante pour entraîner les copeaux depuis l'extrémité inférieure de rampe longitudinale ascendante jusqu'à son extrémité supérieure, les palettes ayant un bord inférieur maintenu selon un écartement approprié constant au dessus de la rampe longitudinale ascendante.

De préférence, les palettes se déplacent selon un chemin de déplacement fermé ayant un trajet latéral ascendant et un trajet latéral descendant opposé, et elles ont une extrémité intérieure solidaire d'une chaîne sans fin guidée et tendue entre un pignon de retour inférieur et un pignon moteur supérieur sollicité en rotation par un motoréducteur, les palettes ayant une extrémité extérieure libre.

D'autres objets, caractéristiques et avantages de la présente invention ressortiront de la description suivante de modes de réalisation particuliers, faite en relation avec les figures jointes, parmi lesquelles:
- la figure 1 est une vue de face d'un dispositif de séparation de copeaux selon un mode de réalisation de la présente invention ;
- la figure 2 est une vue de dessus du dispositif de la figure 1, illustré sans le motoréducteur, la chaîne et les liaisons motrices étant cachées par un capot de chaîne ;
- la figure 3 est une vue de côté gauche du dispositif de la figure 1, sans son système d'évacuation et sans protection de sécurité ;
- la figure 4 est une vue de face en coupe selon le plan A-A de la figure 2 ;
- la figure 5 est une vue de côté gauche en coupe transversale selon le plan B-B de la figure 2 ;
- la figure 6 est une vue de détail en coupe transversale montrant le guidage et le positionnement des palettes du convoyeur selon un mode de réalisation de la présente invention ;
- la figure 7 illustre, en coupe longitudinale vue d'arrière, un dispositif de guidage et de tension de chaîne selon un mode de réalisation de l'invention ;
- la figure 8 illustre, en vue de face schématique, un dispositif de séparation de copeaux selon l'invention adapté sur une machine-outil.

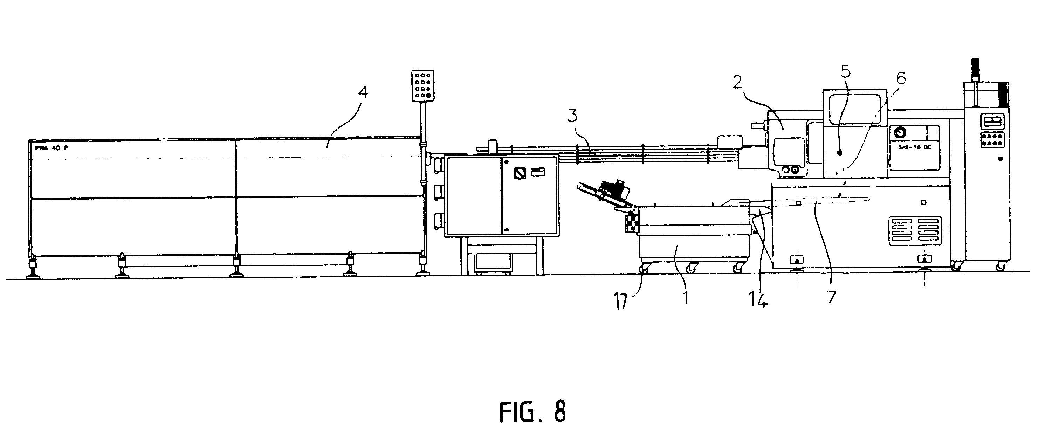

Comme le représente la figure 8, un dispositif de séparation de copeaux 1 selon la présente invention est destiné à être adapté à une machine-outil 2 telle qu'un tour multibroche qui permet d'usiner des barres 3 alimentées par un embarreur 4. Le dispositif de séparation de copeaux 1 est placé à l'entrée de la machine-outil 2, entre la machine-outil 2 et l'embarreur 4, dans la zone située sous les barres 3 à usiner.

Lors de l'usinage les outils 5 de la machine-outil 2 découpent des copeaux 6 qui tombent par gravité sur une tôle inclinée 7 qui les dirige vers le dispositif de séparation de copeaux 1.

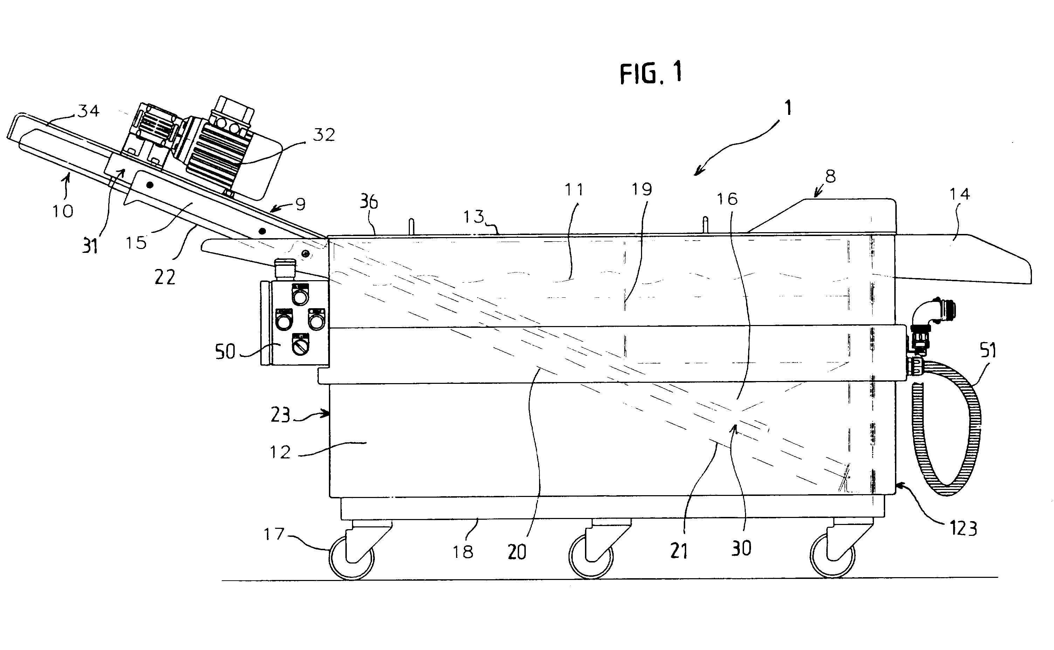

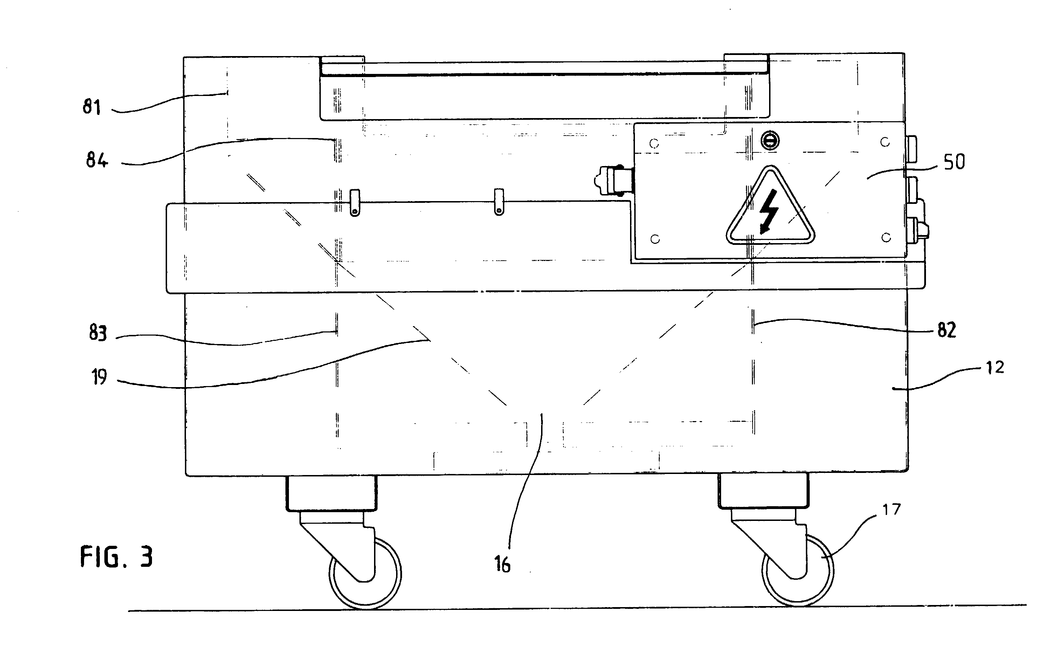

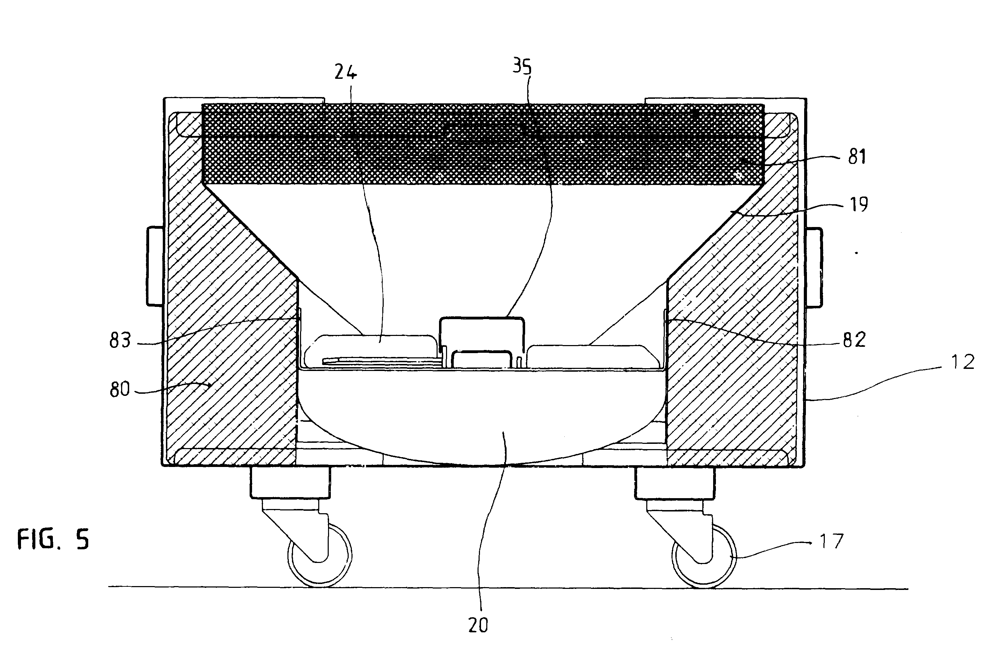

Dans le mode de réalisation illustré plus en détail sur les figures 1 à 7, le dispositif de séparation de copeaux 1 comprend des moyens de réception 8 pour recevoir l'huile de coupe et les copeaux sortant de la zone d'usinage de la machine-outil 2, des moyens de transfert de copeaux 9 pour transférer les copeaux depuis les moyens de réception 8 jusqu'à une sortie 10 de copeaux située en une position plus élevée que le niveau d'huile de coupe 11.

Selon l'invention, le dispositif de séparation de copeaux 1 est un ensemble monobloc déplaçable distinct de la machine-outil 2 et comportant un bac 12 étanche à l'huile et ouvert en partie supérieure 13. Le bac 12 est adapté pour contenir de l'huile de coupe jusqu'à un niveau d'huile de coupe 11 supérieur au niveau d'huile présent dans le carter de la machine-outil 2. Le dispositif selon l'invention comprend un bec de retour d'huile 14 adapté pour évacuer par gravité le trop plein d'huile du bac 12 et pour le déverser dans le carter de la machine-outil 2.

Dans le dispositif de séparation de copeaux 1, les moyens de transfert 9 comprennent un convoyeur 15 adapté pour déplacer les copeaux depuis une zone inférieure de réception 16 dans le bac 12 en les relevant jusqu'à la sortie 10 de copeaux.

Les moyens de réception 8 sont adaptés pour recevoir et guider vers ladite zone inférieure de réception 16 les copeaux et l'huile de coupe provenant de la machine-outil 2.

Comme on le voit sur les figures 1 et 8, le dispositif de séparation de copeaux 1 selon le mode de réalisation illustré est un chariot déplaçable monté sur des roulettes 17 et dimensionné pour permettre son engagement sous le passage de barres entre la machine-outil 2 et un embarreur 4.

Le bac 12 est généralement parallélépipédique, et les roulettes 17 sont adaptées en face inférieure 18 du bac 12. Le bec de retour d'huile 14 dépasse d'un premier petit côté 123 du bac 12, tandis que la sortie de copeaux 10 est située dans la zone du second petit côté 23 du bac 12. Les moyens de réception 8 sont disposés dans la zone du premier petit côté 123 du bac 12, et ces moyens de réception 8 peuvent avantageusement comprendre une trémie 19 verticale, par exemple à section horizontale généralement rectangulaire qui se réduit progressivement vers le bas en se raccordant au convoyeur 15.

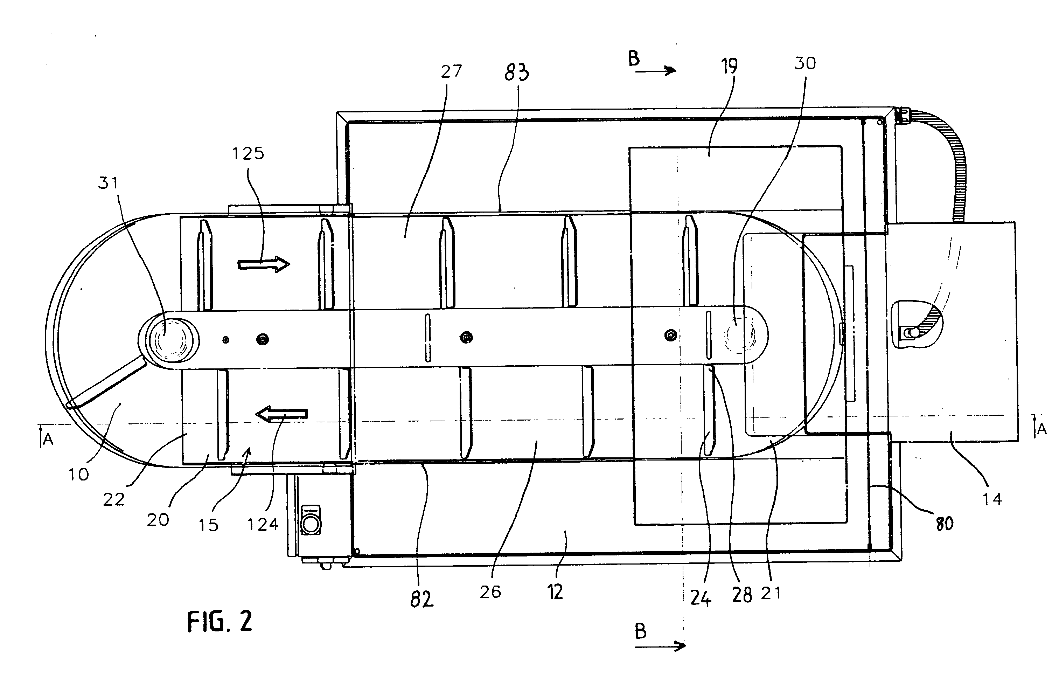

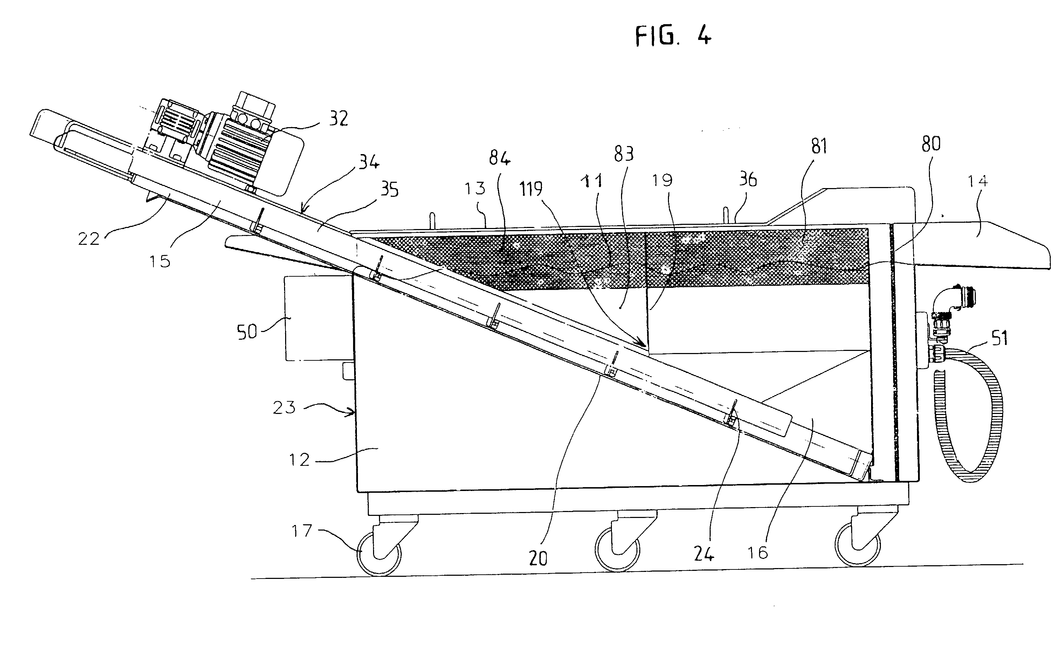

Comme on le voit mieux sur les figures 2 et 4, le convoyeur 15 comprend une rampe longitudinale ascendante 20 dont l'extrémité inférieure 21 est engagée sous les moyens de réception 8 tels que la trémie 19, et dont l'extrémité supérieure 22 dépasse longitudinalement au-delà du second petit côté 23 du bac 12. La rampe longitudinale ascendante 20 peut être une tôle formant une partie centrale surélevée et inclinée longitudinalement du fond du bac 12. Son extrémité inférieure se raccorde à la base de la trémie 19, en laissant un passage 119 supérieur libre pour la sortie des copeaux transportés sur le convoyeur 15.

Dans le convoyeur 15, des palettes 24 allongées sont orientées transversalement au dessus de la rampe longitudinale ascendante 20, et sont guidées et entraînées en translation longitudinale le long de la rampe longitudinale ascendante 20 comme illustré par les flèches 124 et 125 sur la figure 2. Les palettes 24 peuvent ainsi entraîner les copeaux depuis l'extrémité inférieure 21 de la rampe longitudinale ascendante 20 jusqu'à son extrémité supérieure 22, en traversant le passage 119.

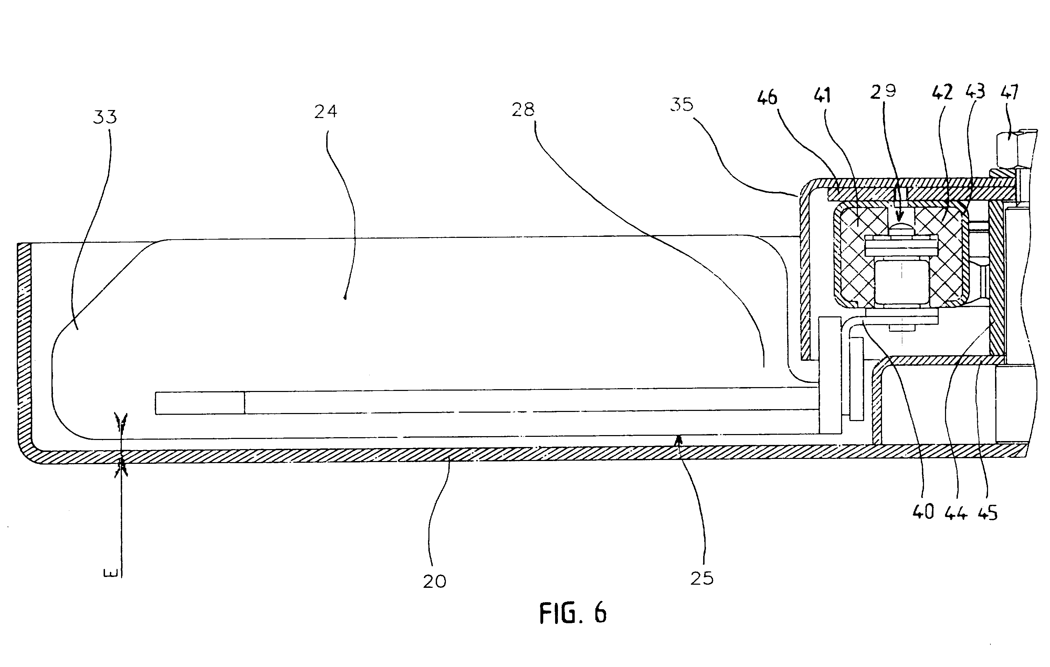

Comme on le voit plus en détail sur la figure 6, les palettes 24 sont dépourvues d'angles vifs et de zones d'accroche, pour éviter l'accumulation de copeaux de type filaire, et comportent un bord inférieur 25 maintenu selon un écartement E approprié constant au dessus de la rampe longitudinale ascendante 20. L'écartement E peut être avantageusement égal à 2 millimètres environ.

Comme illustré sur la figure 2, les palettes 24 se déplacent le long de la rampe longitudinale ascendante 20 selon un chemin de déplacement fermé ayant un trajet latéral ascendant 26 et un trajet latéral descendant 27 opposé.

Les palettes 24 ont une extrémité intérieure 28 solidaire d'une chaîne 29 sans fin guidée et tendue entre un pignon de retour inférieur 30 et un pignon moteur supérieur 31 sollicité lui-même en rotation par un motoréducteur 32. Les palettes 24 ont une extrémité extérieure 33 libre.

Dans la partie émergente du convoyeur 15, c'est-à-dire la partie située au dessus du niveau 11 de l'huile dans le bac 12, la rampe longitudinale ascendante 20 et les palettes 24 sont recouvertes avec un capot de protection 34, qui peut avantageusement être transparent .

Sur toute la longueur du convoyeur 15, la chaîne 29 et les pignons 30 et 31 sont recouverts d'un capot de chaîne 35, qui a pour objet d'éliminer le risque d'incidents dus aux rejets de fin de barres ou de pièces, et de constituer une barrière de sécurité pour les opérateurs. Le capot de chaîne 35 a également pour effet de limiter l'accumulation de copeaux dans le système d'entraînement.

Le capot de protection 34 transparent, par exemple en matière plastique, permet de visualiser la charge des palettes et assure la sécurité des opérateurs.

Un capot de bac 36 amovible et transparent peut également recouvrir le bac 12.

Le motoréducteur 32 est disposé de façon à limiter la hauteur totale du dispositif selon l'invention. Avantageusement, le motoréducteur 32 peut comprendre un moteur électrique associé à un réducteur à renvoi d'angle pour sortie radiale, comme illustré sur la figure 1.

On facilite ainsi l'adaptation du dispositif sur une machine à embarreur intégré.

On peut utiliser un moteur de faible puissance, qui favorise les économies d'énergie. Le moteur est alimenté à partir d'un tableau de commande 50 recevant l'énergie électrique par l'intermédiaire d'un raccord flexible 51 connectable à la machine-outil 2.

Comme on le voit sur les figures, notamment sur la figure 6, le convoyeur 15 comporte une chaîne 29 de grande section, évitant le blocage du système d'amenage par l'accumulation des copeaux. Un système de guide chaîne, dont un mode de réalisation est illustré sur cette figure 6, permet un guidage parfait des palettes 24 pour garantir leur stabilité en charge. Dans ce système de guide chaîne, la palette 24 est raccordée selon son extrémité intérieure 28 à la chaîne 29 par une équerre 40, et la chaîne 29 est engagée entre deux pièces de forme longitudinales 41 et 42 emprisonnées dans un profilé métallique 43 en matière anti adhérente telle que le polytétrafluoroéthylène, fixé au bâti du dispositif. Une entretoise 44, engagée entre un capot inférieur 45 et une plaque supérieure 46 solidaire du profilé 43, détermine la position verticale du guide chaîne, et fixe ainsi l'écartement E. Des fixations à vis et écrous 47 serrent l'ensemble formé par le capot de chaîne 35, la plaque supérieure 46, l'entretoise 44 et le capot inférieur 45 sur le bâti et la rampe 20.

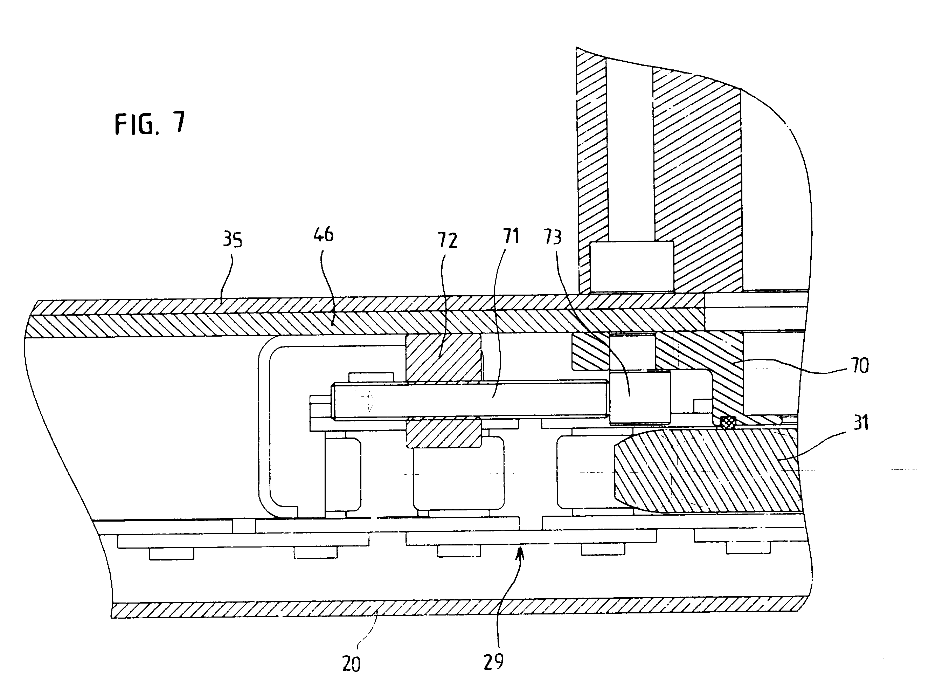

La figure 7 illustre un mode de réalisation de dispositif de guidage et de tension de chaîne, comprenant un coulisseau 70 monté à coulissement longitudinal sous la plaque supérieure 46 et portant le pignon moteur supérieur 31. Le coulisseau 70 est repoussé par une vis longitudinale 71 vissée dans un bloc 72 solidaire de la plaque supérieure 46 et en butée contre un pion 73 solidaire du coulisseau 70.

Le dispositif selon l'invention peut avantageusement comprendre un détecteur de bourrage ou de surcharge, par exemple détectant une surintensité dans le moteur, actionnant un contact sec connecté en série dans une ligne de transmission de signal elle-même connectable à la machine-outil 2 par le raccord flexible 51 pour interrompre l'arrivée de copeaux en cas de bourrage ou de surcharge.

On peut également avantageusement prévoir un dispositif de refroidissement de l'huile contenue dans le bac 12.

Comme on le voit sur la figure 2, la sortie 10 est constituée d'une interruption de la rampe longitudinale ascendante 20 avant la zone d'inversion de trajet des palettes 24. Ainsi, en cours de fonctionnement, les copeaux et l'huile tombent dans la trémie 19, et les copeaux s'accumulent sur l'extrémité inférieure 21 du convoyeur 15. Par rotation du motoréducteur 32 qui entraîne la chaîne 29 et les palettes 24, les palettes 24 du trajet ascendant 26 entraînent progressivement les copeaux dans la direction ascendante 124 jusqu'à atteindre la sortie 10. Sur une partie de leur trajet, les copeaux sortent de l'huile de coupe et sont ainsi égouttés, puis ils atteignent la sortie 10 dans laquelle ils tombent par gravité dans un dispositif d'évacuation non représenté sur les figures.

Dans le mode de réalisation illustré sur les figures, le dispositif comprend avantageusement des moyens pour séparer les copeaux et l'huile de coupe. En particulier, on prévoit une plaque filtrante 80 verticale intérieure au voisinage du premier petit côté 123 du bac 12, entre la trémie 19 et le bec de retour d'huile 14. Egalement, la trémie 19 comporte une paroi périphérique supérieure filtrante 81 descendant un peu au dessous du niveau d'huile 11. Dans sa portion allant de la trémie 19 à sa sortie du bac 12, la rampe longitudinale ascendante 20 est bordée de deux flasques 82 et 83 dont les portions supérieures 84 sont filtrantes. Les portions ou parois filtrantes sont adaptées pour laisser passer l'huile et retenir les copeaux.

La présente invention n'est pas limitée aux modes de réalisation qui ont été explicitement décrits, mais elle en inclut les diverses variantes et généralisations contenues dans le domaine des revendications ci-après.

## Revendications

1. Dispositif de séparation de copeaux (1), adaptable à une machine-outil (2) pour séparer et évacuer les copeaux (6) résultant de l'usinage effectué par la machine-outil (2), comprenant des moyens de réception (8) de l'huile de coupe et des copeaux sortant de la zone d'usinage de la machine-outil (2), et des moyens de transfert des copeaux (9) depuis les moyens de réception (8) jusqu'à une sortie (10) de copeaux située en une position plus élevée que le niveau d'huile de coupe (11), caractérisé en ce que le dispositif (1) est un ensemble monobloc déplaçable distinct de la machine-outil (2) et comportant un bac (12) étanche à l'huile et ouvert en partie supérieure (13), le bac (12) étant adapté pour contenir de l'huile jusqu'à un niveau d'huile de coupe (11) supérieur à celui présent dans le carter de la machine-outil (2), avec un bec de retour d'huile (14) adapté pour évacuer par gravité le trop plein d'huile du bac (12) et pour le déverser dans le carter de la machine-outil (2), avec un convoyeur (15) adapté pour déplacer les copeaux depuis une zone inférieure de réception (16) dans le bac (12) en les relevant jusqu'à la sortie (10) de copeaux, et avec les moyens de réception (8) adaptés pour recevoir et pour guider vers ladite zone inférieure de réception (16) les copeaux et l'huile de coupe provenant de la machine-outil (2).

2. Dispositif selon la revendication 1, caractérisé en ce qu'il constitue un chariot déplaçable monté sur des roulettes (17) et dimensionné pour permettre son engagement sous le passage de barres entre la machine-outil (2) et un embarreur (4).

3. Dispositif selon l'une des revendications 1 ou 2, caractérisé en ce que le bac (12) est généralement parallélépipédique, avec des roulettes (17) adaptées en face inférieure (18) du bac (12), avec le bec de retour d'huile (14) dépassant d'un premier petit côté (123) du bac (12), avec la sortie de copeaux (10) située dans la zone de second petit côté (23) du bac (12), et avec les moyens de réception (8) disposés dans la zone du premier petit côté (123) du bac (12).

4. Dispositif selon l'une quelconque des revendications 1 à 3, caractérisé en ce que les moyens de réception (8) comprennent une trémie (19) verticale à section horizontale généralement rectangulaire.

5. Dispositif selon l'une quelconque des revendications 1 à 4, caractérisé en ce que le convoyeur (15) comprend :
- une rampe longitudinale ascendante (20) dont l'extrémité inférieure (21) est engagée sous les moyens de réception (8) et dont l'extrémité supérieure (22) dépasse longitudinalement au-delà du second petit côté (23) du bac (12),
- des palettes (24) allongées orientées transversalement au dessus de la rampe longitudinale ascendante (20), guidées et entraînées en translation longitudinale le long de la rampe longitudinale ascendante (20) pour entraîner les copeaux depuis l'extrémité inférieure (21) de rampe longitudinale ascendante (20) jusqu'à son extrémité supérieure (22), les palettes (24) ayant un bord inférieur (25) maintenu selon un écartement (E) approprié constant au dessus de la rampe longitudinale ascendante (20).

6. Dispositif selon la revendication 5, caractérisé en ce que les palettes (24) se déplacent selon un chemin de déplacement fermé ayant un trajet latéral ascendant (26) et un trajet latéral descendant (27) opposé, et elles ont une extrémité intérieure (28) solidaire d'une chaîne (29) sans fin guidée et tendue entre un pignon de retour inférieur (30) et un pignon moteur supérieur (31) sollicité en rotation par un motoréducteur (32), les palettes (24) ayant une extrémité extérieure (33) libre.

7. Dispositif selon la revendication 6, caractérisé en ce que la chaîne (29) et les pignons (30, 31) sont recouverts d'un capot de chaîne (35).

8. Dispositif selon l'une quelconque des revendications 5 à 7, caractérisé en ce que la rampe longitudinale ascendante (20) et les palettes (24) sont recouvertes, dans la partie émergente et l'extrémité supérieure, avec un capot de protection (34) transparent.

9. Dispositif selon l'une quelconque des revendications 1 à 8, caractérisé en ce qu'il comprend un détecteur de bourrage actionnant un contact sec connecté en série dans une ligne de transmission de signal connectable à la machine-outil (2) pour interrompre l'arrivée de copeaux.

10. Dispositif selon l'une quelconque des revendications 1 à 9, caractérisé en ce qu'il comprend un dispositif de refroidissement de l'huile contenue dans le bac (12).
